# EUROPÄISCHE PATENTANMELDUNG

(11) **EP 1 864 627 A2**
(43) Veröffentlichungstag der Anmeldung: **12.12.2007**
(21) Anmeldenummer: 07009455.2
(22) Anmeldetag: 11.05.2007
(51) Int. Cl.: A61C 13/00, A61C 13/20

(54) **Verfahren zur Herstellung von Zahnersatz**

(30) Priorität: 07.06.2006 DE 102006026776
(71) Anmelder: Heraeus Kulzer GmbH, 63450 Hanau (DE)
(72) Erfinder: Ruppert, Klaus, Dr., 63477 Maintal (DE); Renz, Karl-Heinz, 60489 Frankfurt (DE)
(74) Vertreter: Kühn, Hans-Christian

(57) **Zusammenfassung**

Die Erfindung betrifft ein Verfahren zur Herstellung von Zahnprothesen nach einem digitalisierten, virtuellen Modell, welches die Kiefersituation wiedergibt, mit den Schritten
> Bereitstellung eines Datensatzes, der die Kiefersituation und -relation wiedergibt,
> digitale Zahnaufstellung,
> Erzeugung einer geteilten Negativform (Rapid Manufacturing) aus den Daten der digitalen Zahnaufstellung,
> Einstecken der Konfektionszähne in die geöffnete Negativform,
> Schließen der Negativform,
> Auffüllen des verbliebenen Hohlraums mit Prothesenkunststoff.

## Beschreibung

Die Erfindung betrifft die Herstellung von Zahnersatz, besonders von Zahnprothesen, Kronen und Brücken.

Die zahntechnische Herstellung von prothetischen Versorgungen (Kronen, Brücken, Prothesen) ist bekannt und in der Literatur detailliert beschrieben. Bei der traditionellen Herstellung von Totalprothesen werden im wesentlichen folgende Schritte durchlaufen:
➢ Abformung durch den Zahnarzt,
➢ Erstellung eines Modells, welches die Zahn- und Kiefersituation wiedergibt,
➢ Aufstellung der künstlichen Zähne in Wachs und Modellation des Zahnfleisches,
➢ Einbettung der Wachsprothese in Gips,
➢ Entfernung des Wachses,
➢ Auffüllen des entstandenen Hohlraums durch Prothesenkunststoff (z.B. PalaXpress).

Zunehmend wird versucht, diesen komplexen Ablauf zu vereinfachen. So hat die Fa. Heraeus Kulzer auf der Internationalen Dentalschau 2005 das Produkt Filou 28® vorgestellt.

Es handelt sich dabei um eine Aufstellhilfe zur exakten Positionierung von künstlichen Prothesenseitenzähnen in Verzahnung ohne Einschränkung der individuellen Funktionsmuster des Patienten. Alle anerkannten "Idealokklusionen" sind mit dem neuen Gerät durch entsprechend vorgefertigte und austauschbare Seitenzahnimpressionsblöcke realisierbar. Der Arbeitsaufwand reduziert sich dabei gegenüber bisherigen Aufstellhilfen um bis zu 50 %.

Dabei werden sog. Zahnimpressionen eingesetzt. Diese Zahnimpressionen, die jeweils den kompletten Oberkiefer/Unterkiefer - Seitenzahnblock fixieren, dienen der anatomisch richtigen Positionierung künstlicher Seitenzähne. Die Seitenzahnblöcke lassen sich auf der Kauebene frei nach allen Seiten in die je nach Patient anatomisch richtige Position verschieben und kontrollierbar fixieren.

Mit einem Laserpointer wird durch speziell positionierte Löcher die exakte räumliche Positionierung bestimmt. Diese Aufstellhilfe bzw. "Seitenzahnpositionierungslehre" lässt sich nach oben klappen, so dass die Unterkiefer-Seitenzähne frei in den Impressionen positioniert und Zahnbasen an das Kieferprofil angepasst werden können. Danach lässt sich das Gerät wieder genau auf die Kauebene zurücksetzen. Die Aufstellhilfe besteht aus einem Grundgerät und Adaptern für marktgängige Artikulatoren.

Weitere Entwicklungen deuten zudem auf eine zunehmende Digitalisierung in der Zahntechnik hin. So wird bereits heute keramischer Zahnersatz durch CAD/CAM-Technologien hergestellt (z.B. Cercon, Fa. Degudent).

Rapid Prototyping-Technologien sind aus dem technischen Bereich wohlbekannt und erfreuen sich zunehmender Beliebtheit. Z.B. wird in US 6,376,148 B1 die Herstellung größerer Objekte aus Material auf Pulver/Flüssigkeit-Basis beschrieben.

DE 101 14 290 B4 beschreibt Rapid-Prototyping-Verfahren für die Dentaltechnik. Nachteile dieser Verfahren ist, dass bei schichtweisen Aufbauten immer ein anisotroper Aufbau des Zahnersatzes entsteht, so dass eine Nachbehandlung z.B. durch zusätzliche Lichthärtung oder thermisch, notwendig ist, um die nötige Festigkeit zu erreichen.

In US 7,029,275 und 7,027,642 werden Scan-Verfahren zur Abnahme der dreidimensionalen Mundsituation beschrieben. Die Nutzung zur Prothesenherstellung wird vorgeschlagen: Die traditionelle Wachsaufstellung kann danach vermieden werden, in dem das Verfahren automatisiert und virtuelle dreidimensionale Zähne aufgestellt werden. Die Kiefer werden gescanned und als virtuelles 3D Modell gespeichert. Dann werden virtuelle Zahntemplate aus dem Speicher des Rechners gezogen. Diese Zahnformen werden in der Dimension den Kiefergegebenheiten angepasst und virtuell aufgestellt. In diesem Stadium ist ein virtuelles 3D-Modell mit Zähnen, Zahnfleisch und damit verbundenen anatomischen Strukturen vorhanden.

Nach diesem Datensatz soll dann die Prothese z.B. durch Fräsen oder Gießen hergestellt werden. Es kann auch mit Stereolithographie ein physisches Modell hergestellt werden, nach dem mit der Methode der verlorenen Form die Prothese gegossen wird, wodurch das Verfahren komplizierter wird.

Gemäß US 6,821,462 werden keramische Dentalrestaurationen wie Zähne oder Brücken unter Verwendung stereolithographischer Methoden hergestellt. Dabei wird zur Herstellung des Mastermodells eine Schale mit Rapid-Prototyping-Methoden erzeugt. Diese Schale kann auch als Wachsform zum Guss oder Druckguss genutzt werden, nach der bekannten Methode der verlorenen Form. Nach Herstellung der Schale wird in konventioneller Weise ein Gipsmodell gegossen. Keramik, Composite oder Metall füllen dann die Gipsform aus.

Nachteile der direkten Rapid-Prototyping-Verfahren sind, dass bei schichtweisen Aufbauten immer ein anisotroper Aufbau des Zahnersatzes entsteht, so dass eine Nachbehandlung z.B. durch zusätzliche Lichthärtung oder thermisch, notwendig ist, um die nötige Festigkeit zu erreichen. Ein weiterer Nachteil ist, dass eine ästhetische Farbgebung nur sehr schwer möglich ist.

Die Aufgabe der Erfindung ist darin zu sehen, diese Nachteile zu umgehen und dennoch den oben beschriebenen traditionellen Prozess zu vereinfachen.

Die Aufgabe wird durch die Merkmale der unabhängigen Ansprüche gelöst. Vorteilhafte Ausgestaltungen sind in den Unteransprüchen angegeben.

Erfindungsgemäß wird die Einbettung, welche zur Herstellung des Zahnersatzes notwendig ist, über ein Rapid Prototyping Verfahren hergestellt.

Die Erfindung betrifft somit ein Verfahren zur Herstellung von Zahnprothesen nach einem digitalisierten, virtuellen Modell, welches die Kieferform wiedergibt,
mit den Schritten
➢ Automatische, digitale Zahnaufstellung (die Zähne sind Konfektionszähne z.B. der Fa. Heraeus Kulzer und liegen in digitalisierter Form vor),
➢ Digitale Erzeugung einer geteilten Negativform (Rapid Manufacturing),
➢ Einstecken der Konfektionszähne in die geöffnete Negativform,
➢ Schließen der geöffneten Negativform,
➢ Auffüllen des verbliebenen Hohlraums durch Prothesenkunststoff mit den üblichen Methoden z.B. Injektion, Stopf-Press-Technik.

Als Prothesenkunststoffe kommen die an sich bekannten in Frage, z.B. PalaXpress der Fa. Heraeus Kulzer.

Die unmittelbaren Vorteile des Verfahrens sind:

Es können etablierte Dentalmaterialien verarbeitet werden, und die funktionalen und ästhetischen Eigenschaften werden nicht wie oben beschrieben beeinträchtigt.

Es versteht sich, dass die Daten des virtuellen Modells entweder durch Scannen eines konventionell durch Abdrucknahme erhaltenen Modells oder durch Digitalisierung der Kieferverhältnisse mit einer geeigneten Kamera beim Zahnarzt erhalten werden können.

Die automatische digitale Aufstellung erfolgt z.B. in einem virtuellen Artikulator wie er z.B. in "Verbatim" Frühjahr 2000 oder US 6,152,731 und US 6,322,359 beschrieben ist.

Die Erzeugung der Negativform kann durch bekannte Verfahren wie Fräsverfahren (5-Achsfräsen), 3D-Druckverfahren, Stereolithografie, Lasersintern oder sonstige Rapid-Prototyping-Verfahren erfolgen.

Der Werkstoff für die Negativform sollte folgende Anforderungen erfüllen:
- dimensionsstabil,
- nicht elastisch,
- die mechanische Festigkeit sollte unter dem zu verarbeitenden Material für die Prothese liegen, so dass im Zweifelsfalle der Werkstoff der Negativform bricht,
- er sollte sich nicht mit dem Prothesenkunststoff verbinden bzw. sollte durch Auftragen einer Isolationsschicht die Anbindung verhindert werden,
- bei Verwendung von heißhärtenden Prothesenwerkstoffen sollte der Werkstoff für die Negativform bis ca. 120 °C temperaturstabil sein,
- vorteilhafterweise ist der Werkstoff der Negativform transparent, um die vollständige Füllung des Hohlraumes beobachten zu können,
- der Werkstoff der Negativfrom darf die Konfektionszahnoberfläche beim Einstecken nicht verletzen.

Die Vorteile des erfindungsgemäßen gegenüber dem traditionellen Verfahren sind:
- Zeitersparnis bei der Aufstellung von Zähnen
- Kosten für Materialien, die beim traditionellen Verfahren verwendet werden müssen (z.B. Dentalwachs, Gips), können eingespart werden,
- Zeitersparnis bei der Erstellung des Zahnersatzes bezogen auf den Gesamtarbeitsablauf.

Die Erfindung betrifft auch ein weitgehend analoges Verfahren zur Herstellung von definitiven Kronen und Brücken aus Keramik nach einem digitalisierten, virtuellen Modell, welches die Kiefersituation wiedergibt, mit den Schritten
➢ Bereitstellung eines Datensatzes, der die digitale Abformung der Kiefer- und Zahnsituation nach der Zahnpräparation wiedergibt
➢ Erzeugung einer geteilten Negativform aus diesem Datensatz (Rapid Manufacturing) unter Verwendung eines formstabilen, porösen, saugfähigen Werkstoffs, unter Berücksichtigung des gegebenenfalls auftretenden Sinterschrumpfes,
➢ Einfüllen eines Keramikschlickers in den verbliebenen Hohlraum,
➢ Entformung nach Erreichen der Formstabilität,
➢ optional weiteres Trocknen,
➢ Sintern des Keramikrohlings.

Die Erfindung betrifft ferner ein Verfahren zur Herstellung von provisorischen Kronen und Brücken nach einem digitalisierten, virtuellen Modell, welches die Kiefersituation nach der Zahnpräparation wiedergibt,
mit den Schritten
➢ Erzeugung einer geteilten Negativform (Rapid Manufacturing),
➢ Einfüllen eines temporären Kronen- & Brückenmaterials in den verbliebenen Hohlraum,
➢ Polymerisation des temporären Kronen- & Brückenmaterials.

Die Negativform wird dabei vorzugsweise aus einem transparenten Kunststoff hergestellt, um ein Angelieren des K&B-Materials durch Licht zu erreichen.

Die Erfindung betrifft schließlich ein Verfahren zur Herstellung von definitiven Kronen und Brücken nach einem digitalisierten, virtuellen Modell, welches die Kiefersituation nach der ZahnPräparation wiedergibt,
➢ mit dem Schritt
➢ Erzeugung einer Krone oder Brücke (Rapid Manufacturing) aus dentalen Werkstoffen wie z.B. licht-, selbst oder dualhärtende Komposite, Keramiken, Edelmetall- oder Nichtedelmetallegierungen.

Die Erfindung wird nachfolgend anhand eines Beispiels erläutert.

Voraus geht die Bestimmung der Kiefer- und Schleimhautverhältnisse mittels digitaler Abformung.

Durch digitale Artikulation wird nun auf Grundlage des erhaltenen Modells und der digitalen Zahnformen eine Zahnaufstellung durchgeführt. Das künstliche Zahnfleisch wird digital modelliert. Um die Kombination aus künstlichen Zähnen und künstlichem Zahnfleisch wird eine Hüllfläche gezogen und eine Einbettung dieses 3D-Objekt mittels RP-Verfahren hergestellt. Die Trennfläche sollte auf Ebene des Kieferknochens verlaufen.

Dies wird durch ein aufbauendes Verfahren mittels des 3D-Druckers Spectrum Z510 der Fa. Z Corperation erreicht.

Nach Aufbringen einer Trennschicht auf Basis von z.B. Polyvinylalkohol werden die Konfektionszähne in die dafür vorgesehenen Hohlräume eingesteckt und entsprechend der Herstellerangaben vorkonditioniert.

Der Prothesenkunststoff auf Basis Methylmethacrylat wird in ausreichender Menge angemischt und in die geteilte Form eingebracht und anschließend die beiden Formhälften zusammengefügt. Durch Polymerisation des Kunststoffes nach Herstellerangaben erhält man nach Entformung den eingliederungsfähigen Zahnersatz.

## Patentansprüche

1. Verfahren zur Herstellung von Zahnprothesen nach einem digitalisierten, virtuellen Modell, welches die Kiefersituation wiedergibt,
mit den Schritten
➢ Bereitstellung eines Datensatzes, der die Kiefersituation und -relation wiedergibt,
➢ digitale Zahnaufstellung,
➢ Erzeugung einer geteilten Negativform (Rapid Manufacturing) aus den Daten der digitalen Zahnaufstellung,
➢ Einstecken der Konfektionszähne in die geöffnete Negativform,
➢ Schließen der Negativform,
➢ Auffüllen des verbliebenen Hohlraums mit Prothesenkunststoff.

2. Verfahren nach Anspruch 1, wobei das Auffüllen des verbliebenen Hohlraums mit Prothesenkunststoff nach einem Injektionsverfahren durchgeführt wird.

3. Verfahren nach Anspruch 1, wobei das Auffüllen des verbliebenen Hohlraums mit Prothesenkunststoff nach dem Stopf-Pressverfahren durchgeführt wird.

4. Verfahren nach Anspruch 1, wobei die Negativform aus einem Gipsrohling hergestellt wird.

5. Verfahren nach Anspruch 1, wobei die Negativform aus einem transparenten Kunststoff hergestellt wird.

6. Verfahren nach Anspruch 1, wobei die digitale Zahnaufstellung automatisiert ist.

7. Verfahren zur Herstellung von definitiven Kronen und Brücken aus Keramik nach einem digitalisierten, virtuellen Modell, welches die Kiefersituation wiedergibt,
mit den Schritten
➢ Bereitstellung eines Datensatzes, der die digitale Abformung der Kiefer- und Zahnsituation nach der Zahnpräparation wiedergibt
➢ Erzeugung einer geteilten Negativform aus diesem Datensatz (Rapid Manufacturing) unter Verwendung eines formstabilen, porösen, saugfähigen Werkstoffs, unter Berücksichtigung des gegebenenfalls auftretenden Sinterschrumpfes,
➢ Einfüllen eines Keramikschlickers in den verbliebenen Hohlraum,
➢ Entformung nach Erreichen der Formstabilität,
➢ optional weiteres Trocknen,
➢ Sintern des Keramikrohlings.

8. Verfahren nach Anspruch 7, wobei die Negativform aus Gips ist.

9. Verfahren zur Herstellung von provisorischen Kronen und Brücken nach einem digitalisierten, virtuellen Modell, welches die Kiefersituation nach der Zahnpräparation wiedergibt,
mit den Schritten
➢ Erzeugung einer geteilten Negativform aus dem digitalisierten, virtuellen Modell (Rapid Manufacturing),
➢ Einfüllen eines temporären Kronen- & Brückenmaterials in den verbliebenen Hohlraum,
➢ Polymerisation des temporären Kronen- & Brückenmaterials.

10. Verfahren nach Anspruch 9, wobei die Negativform aus einem transparenten Kunststoff hergestellt wird, um ein Angelieren des K&B-Materials durch Licht zu erreichen.
